# EUROPEAN PATENT SPECIFICATION

(11) **EP 4 210 469 B1**
(45) Date of publication and mention of the grant of the patent: **05.11.2025**
(21) Application number: 21785980.0
(22) Date of filing: 09.09.2021
(51) Int. Cl.: A01G 9/24, A01G 31/06

(54) **VERTICALLY BUILT CULTIVATION SYSTEM FOR CULTIVATING PLANTS AND OPERATING METHOD THEREOF**
VERTIKAL AUFGEBAUTES KULTIVIERUNGSSYSTEM ZUR KULTIVIERUNG VON PFLANZEN UND BETRIEBSVERFAHREN DAFÜR
SYSTÈME DE CULTURE CONSTRUIT VERTICALEMENT POUR CULTIVER DES PLANTES ET PROCÉDÉ DE FONCTIONNEMENT DE CELUI-CI

(30) Priority: 09.09.2020 IT 202000021334
(43) Date of publication of application: 19.07.2023
(73) Proprietor: ZERO SRL, 33170 Pordenone (IT)
(72) Inventor: ALESSIO, Andrea, 33170 Pordenone (IT); MODESTO, Daniele, 33170 Pordenone (IT)
(74) Representative: Studio Torta S.p.A.
(86) International application number: PCT/IB2021/058212
(87) International publication number: WO 2022/053975

(56) References cited:
- WO-A1-2008/111830
- WO-A1-2019/077571
- CN-A- 102 318 523
- DE-A1- 1 454 572

## Description

### TECHNICAL FIELD

The present invention relates to a vertically built cultivation system for cultivating plants and to the operating method thereof.

In particular, the present invention relates to the distribution of climatised/conditioned air in a vertically built cultivation system (vertical farm) to which the following discussion will explicitly refer without losing generality.

### BACKGROUND ART

As is known, vertically built cultivation systems, so-called "vertical-farms", are structured to implement high-density plant cultivation processes, such as plants/vegetables, in closed cultivation containers by means of the so-called artificial cultivation systems which differ from traditional cultivation systems at least in that they use soil-free cultivation trays, use controlled lighting and power systems, and conditioning systems to feed conditioned air into the closed cultivation container. Generally, the cultivation trays are mounted on support frames and are arranged on a series of cultivation planes superimposed on more height levels so as to conveniently exploit, in addition to the traditional horizontal space, also the vertical space available in the cultivation container.

In the cultivation systems described above, the conditioning system does not guarantee the correct distribution of temperature and humidity inside the cultivation container. In particular, the aforesaid cultivation systems show a certain degree of unevenness in the temperature and humidity of the air in the cultivation container as the height of the cultivation planes varies. This variation leads to the implementation of an optimal cultivation process only in some cultivation planes and exposes the remaining cultivation planes to different climatic conditions, which significantly affect the outcome of the cultivation in terms of either the quantity and the qualitative or organoleptic properties of the plants produced.

Cultivation systems are also described in WO2019077571 A1, WO2008/111830 A1 and CN 102318523 A.

### DISCLOSURE OF INVENTION

Aim of the present invention is therefore to realize a vertically built cultivation system having a conditioning system which is able to distribute the conditioned air uniformly inside the cultivation container so as to guarantee the same conditions of air humidity and temperature at all the cultivation trays independently of the height level of the relative cultivation planes.

This aim is achieved by the present invention in that it relates to a cultivation system for cultivating plants comprising: a closed cultivation container which extends along a horizontal reference axis and having vertical side walls which extend parallel to said reference axis, a plurality of cultivation trays for cultivating plants, which are arranged in said cultivation container in positions alongside one another approximately horizontal and lying on a series of cultivation planes arranged one on top the other with respective pre-set heights relative to a horizontal reference plane so as to form a plurality of vertical columns of cultivation trays, an air-conditioning system which is designed to feed conditioned air into said cultivation container by means of at least one box-shaped air distribution duct, which is vertically interposed between two vertical columns of cultivation trays, said air distribution duct comprises two air diffusion walls opposite each other, which extend on respective vertical planes which are parallel to each other and to said reference axis, the two air diffusion walls have support means structured to support said cultivation trays arranged on said two columns of trays in the respective cultivation planes, and have a plurality of through openings for selectively emitting the conditioned air present in said air distribution duct towards said cultivation trays of said two columns of trays.

Preferably the cultivation system is also realized as defined in the corresponding accompanying claims.

The present invention further relates to an operating method for a cultivation system for cultivating plants comprising: a closed cultivation container which extends along a horizontal reference axis and having vertical side walls which extend parallel to said reference axis, a plurality of cultivation trays for cultivating plants, which are arranged in said cultivation container in positions alongside one another approximately horizontal and lying on a series of cultivation planes arranged one on top the other with respective pre-set heights relative to a horizontal reference plane so as to form a plurality of vertical columns of cultivation trays, an air-conditioning system which is designed to feed conditioned air into said cultivation container by means of at least one box-shaped air distribution duct, which is vertically interposed between two vertical columns of cultivation trays, said air distribution duct comprises two air diffusion walls opposite each other, which extend on respective vertical planes which are parallel to each other and to said reference axis, the two air diffusion walls have support means structured to support said cultivation trays arranged on said two columns of trays in the respective cultivation planes, and have a plurality of through openings for selectively emitting the conditioned air present in said air distribution duct towards said cultivation trays of said two columns of trays.

Preferably the operating method for a cultivation system is provided as defined in the corresponding accompanying claims.

### BRIEF DESCRIPTION OF THE DRAWINGS

The present invention will now be described with reference to the accompanying drawings, which show a non-limiting embodiment thereof, wherein:
- Figure 1 is a schematic plan view of a vertically built cultivation system for the production of plants realized according to the dictates of the present invention,
- Figure 2 is a section I-I with parts removed for clarity's sake and enlarged scale parts of the vertically built cultivation system shown in Figure 1,
- Figure 3 is a schematic side elevation view of an air diffusion wall included in the vertically built cultivation system subject matter of the present invention,

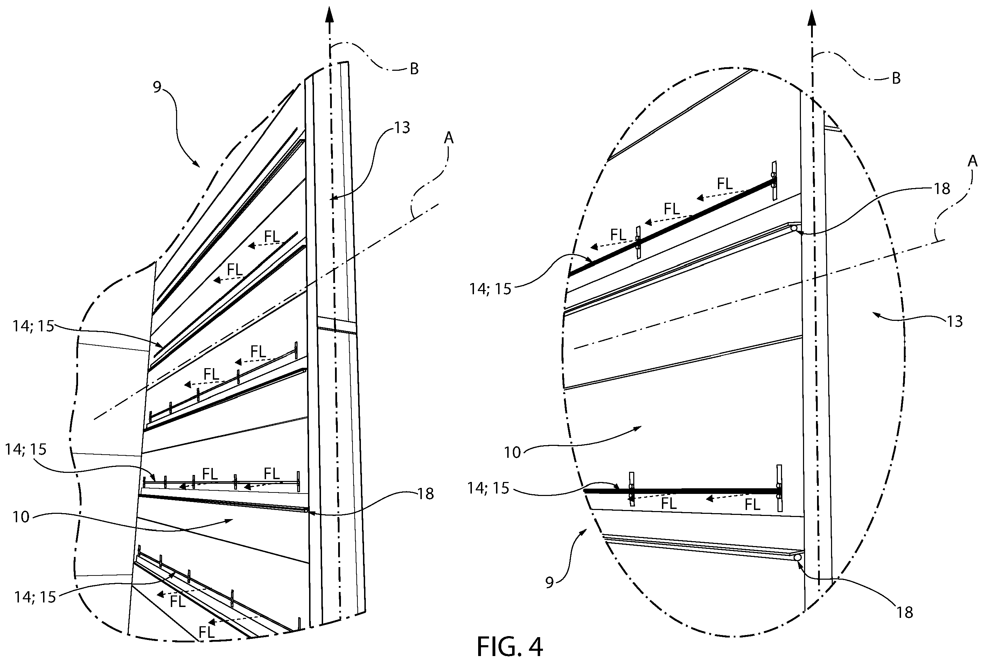

- Figure 4 is a side elevation perspective view with enlarged scale parts, of an air diffusion wall included in the vertically built cultivation system subject matter of the present invention,
- Figure 5 is a side elevation perspective view with enlarged scale parts, of an air diffusion wall included in the vertically built cultivation system subject matter of the present invention,
- Figure 6 is a side elevation perspective view of a detail of the vertically built cultivation system subject matter of the present invention.

### BEST MODE FOR CARRYING OUT THE INVENTION

The present invention will now be described in detail with reference to the accompanying Figures to enable a skilled person to realize and use it. Various modifications of the embodiment described will be immediately clear to the skilled person and the general principles disclosed can be applied to other embodiments as defined in the accompanying drawings. Therefore the present invention must not be considered as limited to the described and shown embodiments, but limited to the appended claims.

The present invention is essentially based on the idea of employing air distribution ducts having a box shape, approximately parallelepiped, and are formed by vertical air diffusion walls on which through openings are obtained and which are arranged on the horizontal cultivation planes to diffuse the conditioned air towards the cultivation trays lying on the cultivation planes themselves.

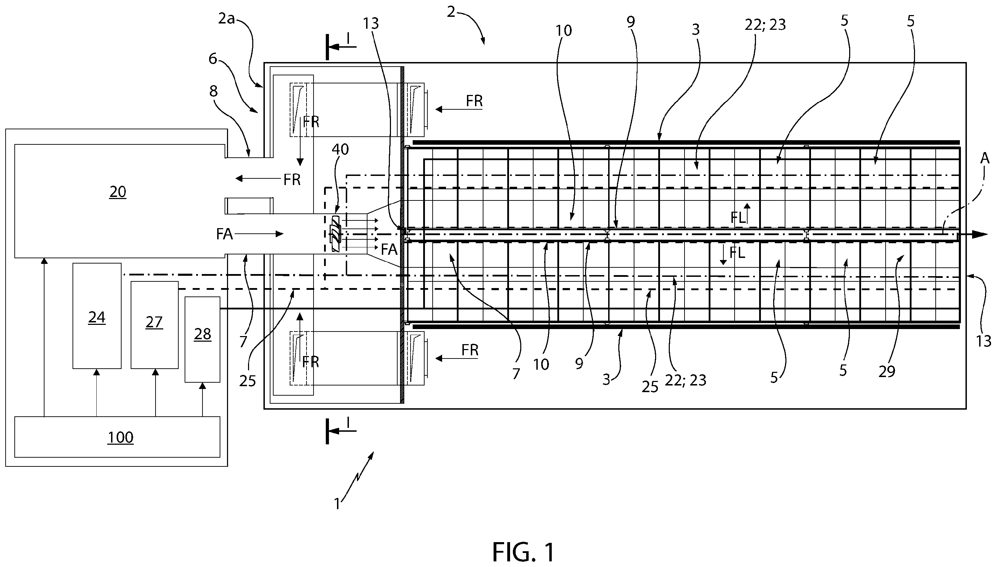

According to an exemplary embodiment shown schematically in Figure 1, number 1 denotes a vertically built cultivation system for cultivating plants.

In the following discussion, the term plant will be understood to mean any plant product. Preferably, the plant product is for food use. By way of non-limiting example, the plants may comprise a choice of: salads, vegetables, herbs (e.g. rocket, basil, mint) or similar. However, it is understood that the cultivation system subject matter of the present invention is not limited to the cultivation of food-grade plants of the type listed above, but it may be used in addition to, or as an alternative to, the cultivation of other types of plants generally cultivated in conventional greenhouses, such as flowers, plants or the like.

The cultivation system 1 comprises a temperature and/or humidity controlled container, hereafter referred to as climatised/conditioned cultivation container 2. The cultivation container 2 is essentially closed and may comprise, for example, a box-shaped body/module. In the example shown in Figure 1, the cultivation container 2 extends along a reference axis A and has an approximately parallelepiped shape. It is understood that the present invention is not limited to a cultivation container 2 corresponding to a module but it may correspond to a closed room within a building (shed).

With reference to the schematic embodiment shown in the accompanying Figures, the vertically built cultivation system 1 comprises one or more support frames 3 arranged inside the cultivation container 2 and preferably arranged to rest on a horizontal plane Z.

The cultivation system 1 also comprises a series of cultivation trays 5 for cultivating the plants which are mounted on the frames 3. With reference to the accompanying Figures, the cultivation trays 5 are supported by the frames 3 so that they lie on a series of horizontal cultivation planes Pi (i comprised between 1 and n), which are arranged one on top the other. The cultivation planes Pi are arranged at pre-set distances from each other associated with respective levels or heights Li (i varying between 1 and n) measured along a vertical axis B with respect to the plane Z.

The cultivation trays 5 may have a polygonal shape and are structured to support and cultivate plants. According to a preferred embodiment, the cultivation trays 5 have a roughly rectangular shape and preferably the same dimensions. The cultivation trays 5 can be structured so that they are stably coupled but easily removable/detachable (separable) on the frame(s) 3.

In the example shown in Figure 1, the cultivation trays 5 lying on the same cultivation plane Pi (i varying between 1 and n) are arranged approximately coplanar to each other one after the other so as to form one or more rows alongside one another (only two of which are shown in Figure 1) which extend in the cultivation container 2 and are parallel to each other and to the reference axis A. Preferably, the cultivation trays 5 of a row are adjacent to the respective cultivation trays 5 of the other row present in the same cultivation plane Pi.

In the example shown, the rows of cultivation trays 5 of a cultivation plane Pi are arranged below and/or above relative rows of cultivation trays lying in the other cultivation planes Pi so that they are vertically aligned and thus form relative vertical columns of rows of cultivation trays 5.

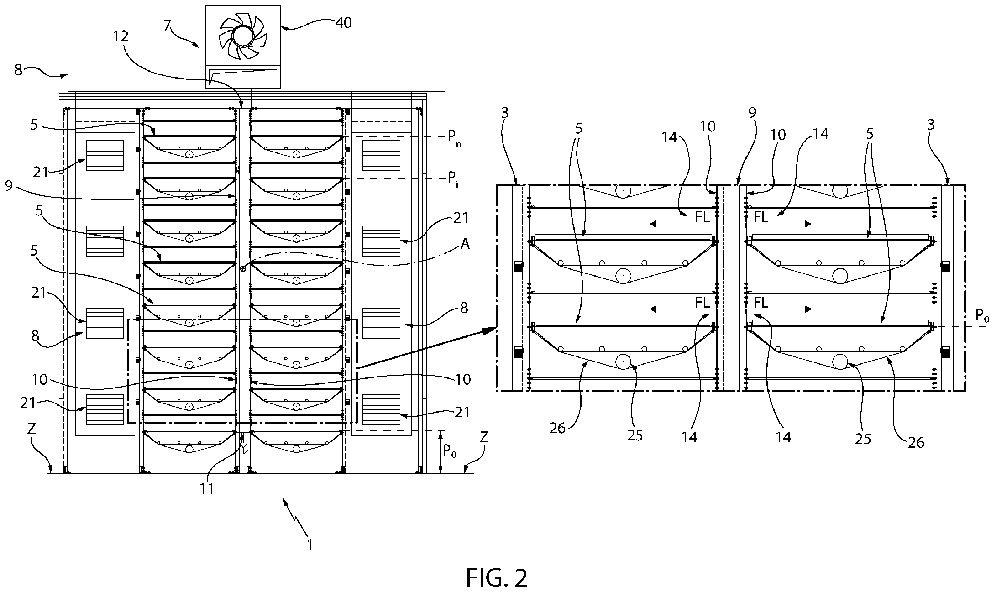

It should be noted that Figures 1 and 2 and the following discussion represent, solely for the purpose of increasing the understanding of the present invention without, however, limiting its scope, two vertical columns formed by two rows of cultivation trays 5, wherein the two columns are vertical and adjacent to each other and extend along the plane Z parallel to the reference axis A. However, it is understood that the cultivation system 1 according to the present invention is not limited to two columns of rows of cultivation trays 5 but it may comprise a plurality of columns. It is further understood that the number of cultivation trays 5 in each row and/or the number of rows of cultivation trays 5 that are present on each cultivation plane Pi, and/or the number of columns of trays and/or the number of cultivation planes Pi, may be varied according to the dimensional and/or production characteristics of the cultivation system 1.

With reference to Figure 1, the cultivation system 1 further comprises an air-conditioning system 6 (or conditioning system) which is configured to condition the air and feed it in the cultivation container 2.

The conditioning system 6 comprises a conditioning apparatus 20 designed to generate/provide a flow of conditioned air, i.e. a flow of air FA wherein at least the temperature and humidity are automatically controlled based on the cultivation process implemented by the cultivation system 1.

The conditioning system 6 further comprises, one or more air distribution ducts 9 (only one of which is shown in the accompanying figures) that are arranged inside the cultivation container 2, and at least one delivery duct 7 that connects the conditioning apparatus 20 to one or more air distribution ducts 9.

With reference to the accompanying figures, the air distribution duct 9 is preferably made of a metallic material (metal sheet) and extends parallel to the axis A. The air distribution duct 9 has a box shape and has an approximately rectangular vertically elongated section transversal to the axis A.

The air distribution duct 9 is preferably formed by an internally hollow body which is parallelepiped in shape and vertically elongated. In the example shown, the air distribution duct 9 has two preferably flat side air diffusion walls 10 lying on respective approximately vertical planes spaced apart and parallel to each other and to the axis A. The air distribution duct 9 further has a flat horizontal lower wall 11 orthogonal to the vertical walls 10 and parallel to the axis A, a flat upper wall 12 horizontal parallel to the lower wall 11, and two opposite flat vertical side walls 13 orthogonal to the axis A. Preferably, the air distribution duct 9 may be modular, i.e. it may be divided into a plurality of vertical portions designed in use to be connected at the relative flanks or side walls 13 so that they are coplanar with each other. For this purpose, on the side walls 13, which are intended to be mutually connected, through openings (not shown) can be obtained, preferably vertical slits designed to allow the conditioned air to pass through the vertical portions that make up the air distribution duct 9.

According to a preferred embodiment shown in Figures 1 and 2, the air distribution duct 9 preferably has the lower wall 11 preferably resting on the plane Z, for example by means of feet or plinths.

In the example shown, the air distribution duct 9 is interposed between the two columns of rows of superposed cultivation trays 5 and has the two air diffusion walls 10 which are adjacent to the respective two columns of rows of cultivation trays 5.

Through openings 14 are obtained on the two vertical walls 10 and which are arranged so that they are facing respective cultivation trays 5 that are present in the cultivation planes Pi.

The air distribution duct 9 extends vertically so that its upper wall 12 lies on a plane arranged above the cultivation plane Pn on which the cultivation trays placed at the maximum height Ln from the plane Z lie. The height of the air diffusion walls 10 is conveniently greater than or equal to the maximum height Ln of the cultivation plane Pi (i=n).

The air distribution duct 9 extends horizontally so that the distance between its side walls 13 is greater than or equal to the length of the rows of cultivation trays 5 measured parallel to the axis A. The length of the air distribution walls 10 measured horizontally (parallel to the axis A) is conveniently greater than or equal to the length of the rows of cultivation trays 5.

It is understood that the vertical and/or horizontal dimensions of the vertical walls 10 may be varied as desired according to one or more of the following characteristics: the internal dimensions of the cultivation container 2, the number of cultivation planes Pi and/or the number of cultivation trays 5, the dimensions and shape of the cultivation trays 5.

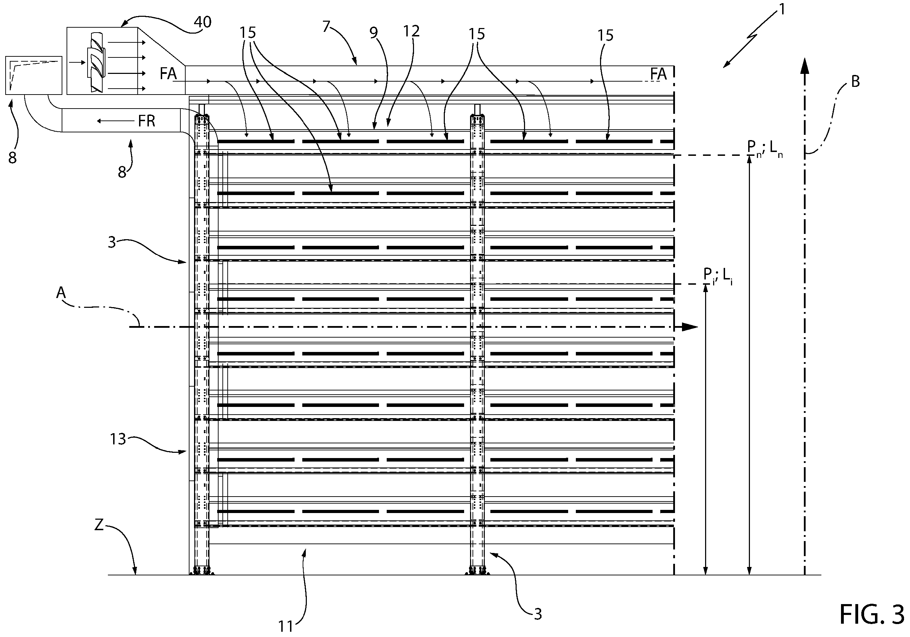

According to a preferred embodiment shown in Figures 2 and 3, the air distribution duct 9 may be connected at the top to the delivery duct 7 to receive the conditioned air and is structured to selectively diffuse it to the cultivation trays 5 through the through openings 14. Preferably, the connection can be made by making through openings in the upper wall 12 which communicate directly with the delivery duct 7. For example, the upper wall 12 may also define the lower horizontal wall of the delivery duct 7 and be perforated. Preferably the upper wall 12 may comprise a perforated metal sheet.

A technical effect obtained thanks to the air distribution duct 9 is to generate air flows FL that directly brush over the cultivation trays 5 and thus the cultivated plants. By conveying the conditioned air directly towards the cultivation trays 5 through the through openings 14, it is possible to ensure the uniformity of the characteristics of the air (at least humidity and temperature) surrounding the cultivation trays 5. In this way, a uniform temperature and air humidity condition is conveniently achieved in the space surrounding the cultivation trays 5 and the relative plants.

As shown in the example embodiment in Figures 1, 2 and 3, the through openings 14 may conveniently comprise slits 15. Preferably, the slits 15 extend horizontally on the air diffusion wall 10 and rectilinear and parallel to each other and to the axis A. Preferably, the slits 15 of an air diffusion wall 10 may be approximately coplanar to the slits 15 formed on the other air diffusion wall 10 of the air distribution duct 9. Preferably, the slits 15 may be formed on the air diffusion wall 10 so that they are parallel to, and slightly above, a relative cultivation plane Pi on which the cultivation trays 5 are arranged.

Preferably, the slits 15 may be facing approximately one row of cultivation trays 5 of a plane Pi and be arranged below the row of cultivation trays 5 of the immediately above row associated with the plane Pi+1. Preferably, the slits 15 of each row of cultivation trays 5 of a cultivation plane Pi may be arranged parallel to the slits 15 of the other rows of cultivation trays 5 that are present in the other cultivation planes Pi.

Preferably, the slits 15 that are laterally facing a row of cultivation trays 5 arranged on a cultivation plane Pi may be mutually aligned and longitudinally discontinuous between them, i.e. they may be longitudinally separated from one another by a pre-set stretch.

The Applicant has found that the use of rectilinear slits 15 that extend so as to be immediately alongside the cultivation trays 5 of the rows has the technical effect of generating approximately horizontal laminar air flows that brush over the plant products present in the cultivation trays 5. The horizontal laminar flows increase the uniformity of air temperature and humidity as their horizontal expansion covers the entire upper cultivation surface of the cultivation tray 5.

In the example shown wherein the cultivation trays 5 of the rows lie on the same cultivation plane Pi, the slits 15 of the two air diffusion walls 10 may be coplanar and are structured to convey the air flows FL in horizontal directions with mutually opposite directions.

The width of the slits 15 measured vertically may vary based on the air flowrate/quantity to be provided to the cultivation tray 5. Preferably, the width of the slits 15 can be between comprised between about 2 mm and about 3 cm. The length of the slits 15 measured horizontally may vary based on the dimensions of the relative cultivation tray 5, e.g. Of the length of its side facing the relative air diffusion wall 10.

According to a preferred embodiment (not shown) respective shutters or bulkheads can be arranged slidably on the slits 15. The bulkheads may be coupled to the relative air diffusion walls 10 so that they are vertically displaced between a closed position, for example a lowered position wherein they fully close the relative slits 15 and an open position wherein they fully open the relative slits 15. The bulkheads can be further displaced vertically between the closed and open positions so as to adjust the quantity of air emitted through the slit 15. The bulkheads may comprise, for example, elongated rectangular laminar plates of metallic or similar material which are designed to slide vertically resting on one face of the relative air distribution wall 10 between the open and closed positions, and vice versa. The displacement of the bulkheads can be selectively controlled manually or additionally or alternatively through respective actuators controlled electronically by an electronic control system 100.

A technical effect of the movable bulkhead is to be able to selectively close the slits 15 in case of absence of the cultivation trays 5 and/or to adjust the flowrate of air emitted from each slit 15 according to the type of plant cultivated in the adjacent cultivation tray 5.

In the example shown, the delivery duct 7 comprises a tubular element which extends horizontally in the cultivation container 2 preferably along the entire length of the air distribution duct 9 while remaining above it.

The technical effect obtained by feeding air in the upper wall 12 of the air distribution duct 9 through the delivery duct 7 is to increase the uniformity of the air distribution pressure in the air distribution duct 9 itself and thus to ensure uniformity in the flowrate of the air flows FL exiting the slits 5.

According to a preferred embodiment, the cultivation trays 5 are coupled in an easily removable (separable) manner to the air distribution duct 9. Preferably, guides or support elements 18 may be arranged on the air diffusion walls 10, for example horizontal plate-like elements, which are stably fixed on the air diffusion walls 10 and have a projecting horizontal internal portion on which the cultivation tray 5 is arranged to rest.

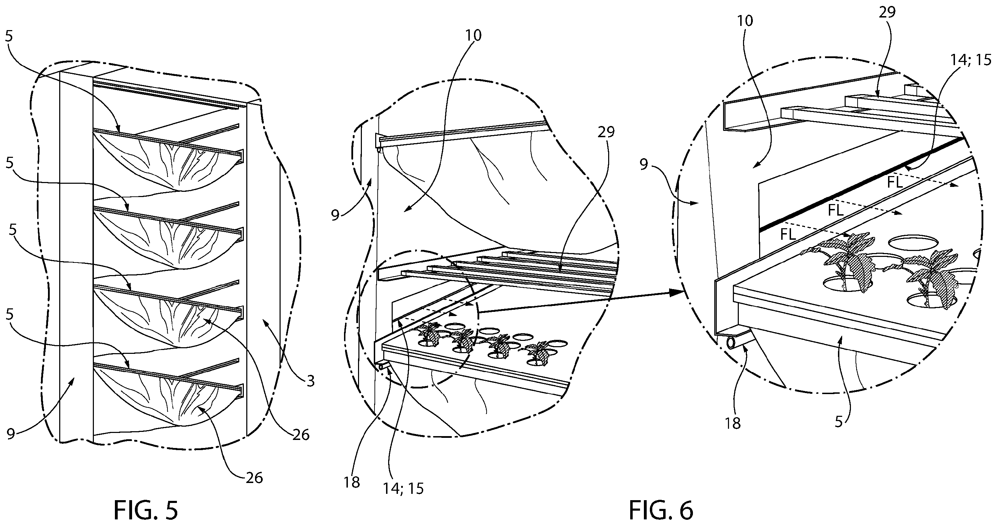

With reference to the exemplary embodiments shown in Figures 5 and 6, preferably the support element 18 of a cultivation tray 5 is arranged on the wall 10 immediately below the slit 15 that emits air towards the tray 5 itself. Preferably, the distance measured vertically between the support element 18 and the relative adjacent slit 15 may approximate by excess the vertical thickness of the tray 5 measured, for example, on the resting side. In this way, the laminar flow of air generated by the slit 15 is conveniently oriented so as to flood/cross the plant products in the tray 5 itself.

In the example shown, the cultivation trays 5 are substantially rectangular in shape and have one side supported by the air distribution duct 9 and the opposite side supported by a vertical column or wall of the frame 3 (Figure 5).

According to an embodiment (not shown), the cultivation system 1 may comprise a plurality of air distribution ducts 9 which extend parallel to each other and to the axis A at pre-set distances from each other corresponding approximately to the width of the cultivation trays 5 measured transversely to the axis A. According to this embodiment, the cultivation trays 5 have opposite sides, parallel to the axis A, which are both supported by two air distribution ducts 9 adjacent to each other. For example, the cultivation tray 5 may comprise one side arranged to rest on the support element 18 of an air diffusion wall 10 of a distribution duct 9 and the opposite (parallel) side arranged to rest on the support element 18 of the air diffusion wall 10 of another adjacent air distribution duct 9.

It is further understood that according to a possible embodiment, the air distribution duct 9 may have the through openings 14 on a vertical wall 10 while the other vertical wall 10 may not have the through openings 14. This embodiment may comprise, for example, only a column of rows of cultivation trays 5 facing the air diffusion wall 10 with through openings 14, while the other air diffusion wall 10 may not have adjacent cultivation trays 5.

According to a preferred embodiment shown in Figure 1, the conditioning apparatus 20 is arranged outside the cultivation container 2, and the delivery duct 7 extends in the cultivation container 2 so that it crosses a vertical wall 2a of the cultivation container 2 so as to extend with an initial stretch at least partially outside the same so as to be connected with an outlet channel of the conditioning apparatus 20 to receive the conditioned air.

The air-conditioning system 6 further comprises at least one suction duct 8 structured to have one or more suction openings 21 arranged in the cultivation container 2.

In the example shown, the suction duct 8 extends from the cultivation container 2 through the vertical wall 2a to the outside thereof, and is connected to an inlet channel to the conditioning apparatus 20 to provide it with the air to be treated/conditioned. In the example shown, the suction openings 21 are arranged in the cultivation container 2 approximately vertical and coplanar to each other, one on top the other, at different heights. It is understood that the suction openings 21 may be placed in the cultivation container 2 also in positions other than those shown in the accompanying figures. For example, according to embodiments (not shown), the suction openings 21 may be placed on the bottom wall of the cultivation container, i.e. at the plane Z, or at a side wall of the same on a plane parallel to the axis A.

With reference to the preferred embodiment shown in Figures 1, 2 and 3, the air-conditioning system 6 further comprises a ventilation assembly 40 which is arranged along the delivery duct 7 and is designed to generate an air flow inside the delivery duct 7 itself so as to convey it with a certain flowrate/pressure in the air distribution duct 9.

With reference to the preferred exemplary embodiment shown in Figures 1, 2 and 3, the ventilation assembly 40 comprises a tubular duct connected to the delivery duct 7 and one or more fans (only one of which is shown in the accompanying figures) which are arranged in the tubular duct to receive the conditioned air with a certain flowrate/pressure from an inlet channel and generate, in an outlet channel, a flow of conditioned air having a pre-set flowrate/pressure greater than the flowrate/pressure present in the inlet channel.

Preferably, the ventilation assembly 40 may be integrated into the delivery duct 7 so that the fan is arranged downstream of the conditioning apparatus 20 and immediately upstream of the air distribution duct 9.

Conveniently, a fan may be arranged at an intermediate stretch of the delivery duct 7 between the vertical wall 2a and the side wall 13 of the air distribution duct 9.

It is understood that the present invention is not limited to arranging a single fan in the intermediate stretch of the delivery duct 7, but it may alternatively and/or additionally provide for arranging one or more fans in the end stretch of the delivery duct 7 that extends directly above the air distribution duct 9 i.e. adjacent to the upper wall 12. Preferably the fan can be an intubated axial fan.

The Applicant has found that the use of the ventilation assemblies 40 along relative delivery ducts 7 close to respective air distribution ducts 9 has the technical effect of optimising the emission of conditioned air at the cultivation trays 5 and of ensuring the possibility of conveying high air flowrates into the air distribution ducts 9, which are higher than the flowrates achievable by using the conditioning apparatus 20 alone.

This solves either the technical problem of high power consumption by the conditioning apparatus 20 or the technical problem of the difficulty of generating laminar flows FL having high air flowrates. In fact, in order to guarantee the compensation for the pressure drops along the initial stretch of the delivery duct 7 and the achievement of high flowrates in the air distribution duct 9 and through the slits 15, it is necessary to use a conditioning apparatus 20 having a particularly powerful ventilation system, whose power consumption, however, has a significant impact on the overall power consumption of the same.

The use of the ventilation assembly 40 in the delivery duct 7 close to the air distribution duct 9 therefore makes it possible, on the one hand, to guarantee a certain flowrate in the air distribution ducts 9 and the ability of being able to generate laminar flows FL characterised by high intensities at the plants, and on the other hand, to use a conditioning apparatus 20 with a ventilation system with reduced power so as to significantly reduce the electrical consumption thereof.

An electronic control system 100 is further configured to selectively control the ventilation assemblies 40 arranged in the relative delivery ducts 7. Preferably, the electronic control system 100 is configured so as to selectively control the rotational speed of the fans of the ventilation assemblies 40 so as to adjust the air flowrates emitted from the air distribution ducts 9 towards the relative cultivation trays 5.

The technical effect obtained thanks to either the use of the ventilation assemblies 40 in the respective delivery ducts 7 or the selective control of the ventilation assemblies 40 themselves is that the air distribution in the air distribution ducts 9 can be precisely adjusted. In this way, it is possible to adjust the flowrates of the laminar flows emitted from the slits 15 of the air distribution ducts 9 according to the implemented cultivation procedures and/or the type of plant products cultivated in the cultivation trays 5 adjacent to the air distribution ducts 9 themselves.

With reference to the preferred embodiment shown in Figure 1, the cultivation system 1 further comprises a feeding system 22 (schematically shown in Figure 1) for feeding a liquid to the cultivation trays 5. The feeding system 22 may preferably be aeroponic and is structured so as to selectively nebulise the liquid at the cultivation trays 5. It is understood that the liquid may be based on a mixture of water and nutrients suitable for plants (fertiliser). The feeding system 22 may be structured to feed selectively and in a controlled manner in terms of quantity and/or type and/or instants, by nebulising, the liquid in the cultivation trays 5.

According to one embodiment shown in Figure 1, the feeding system 22 may comprise, for each horizontal row of cultivation trays 5, at least one delivery pipe or duct 23 by means of which the liquid circulates, and a series of nebulising devices, for example nozzles (not shown), which are preferably arranged immediately below the cultivation tray 5 of the cultivation plane Pi so as to nebulise the liquid towards the lower surface of the cultivation trays 5 above, and are hydraulically connected to the delivery duct 23 to receive the liquid from a feeding assembly 24. The feeding assembly 24 is of a known type and will therefore not be further described except to specify that it may comprise liquid containment tanks (not shown) and hydraulic pumps (not shown) which suck in the liquid from the tanks and provide it at input to the delivery ducts 23.

With reference to the preferred embodiment shown in Figure 1, the cultivation system 1 may further comprise, a liquid suction system 25, which is structured so as to suck the dispersed nebulised liquid in each of the cultivation trays 5. According to a preferred embodiment shown in the accompanying figures, the liquid suction system 25, comprises liquid collection tanks 26 which are arranged immediately below the cultivation trays 5 and are structured to collect and contain the liquid that precipitates during nebulisation. The liquid suction system 25 may further comprise suction ducts, which extend in the liquid collection tanks 26 and are connected to a suction apparatus 27 which in use is designed to suck in the liquid from the liquid collection tanks so as to empty them.

With reference to the preferred embodiment shown in Figure 1, the cultivation system 1 further preferably comprises, a lighting system 28 designed for the controlled illumination of the plant products in the cultivation trays 5. Preferably, the cultivation system 28 may comprise a plurality of LEDs, preferably arranged on support bars 29 arranged above the cultivation trays 5 (Figure 6).

The electronic control system 100 comprises one or more electronic control units configured to supervise the cultivation process implemented by the cultivation system 1. In particular, the electronic control system 100 is configured so as to control: the conditioning system 6, the feeding system 22, the liquid suction system 25, and the lighting system 28.

The operating method for the cultivation system 1 essentially comprises the steps of: activating the conditioning apparatus 20 to feed a flow FA of conditioned air to the air distribution duct 10 through the delivery duct 9 so as to diffuse air flows FL through the slits 15 at the cultivation trays 5, and to suck in through the suction duct 8 the air FR from the cultivation container 2.

The method comprises the step of selectively emitting through the through openings 14 the conditioned air present in the air distribution duct in opposite directions to each other towards the cultivation trays present in the two columns of trays.

Preferably, the method further comprises the step of selectively activating the ventilation assemblies 40 so as to increase the flowrate of the conditioned air flow at the relative air distribution ducts 9.

Preferably, the method further comprises the step of selectively controlling the rotational speed of the fans of the ventilation assemblies 40 so as to adjust the flowrate of the conditioned air flow at the relative air distribution ducts 9.

The cultivation system described above is advantageous because it ensures an even distribution of temperature and humidity of the air in all cultivation planes of the system and guarantees the implementation of the same cultivation conditions in all trays.

In addition, the structure of the air distribution walls of each distribution duct advantageously allows to support trays simultaneously with the distribution of air without the need for additional frames. This makes it possible to: optimise the occupation of the space inside the cultivation container, reduce complexity, simplify assembly, and reduce the construction costs of the system.

The distribution of a plurality of air distribution ducts in the space inside the container further makes it possible to improve the uniformity of the temperature and humidity of the air and avoids implementing repeated inversions of the air flow directions carried out in the systems wherein the air diffusion takes place by emission of air from one side wall of the container and the suction of air from the opposite side wall of the container.

Finally, it is clear that modifications and variations may be made to the cultivation system and the operating method described and shown above without departing from the scope of protection of the present invention in accordance with the appended claims.

## Claims

1. A cultivation system (1) for cultivating plants comprising:
a closed cultivation container (2) which extends along a horizontal reference axis (A) and having vertical side walls which extend parallel to said reference axis (A),
a plurality of cultivation trays (5) for cultivating the plants, which are arranged in said cultivation container (2) in positions alongside one another approximately horizontal and lying on a series of cultivation planes (Pi) arranged one on top of the other with respective pre-set heights (Li) relative to a horizontal reference plane (Z) so as to form a plurality of vertical columns of cultivation trays (5),
an air-conditioning system (6) which is designed to feed conditioned air into said cultivation container (2) through at least a box-shaped air distribution duct (9), which is vertically interposed between two vertical columns of cultivation trays (5),
said air distribution duct (9) comprises two air diffusion walls (10) opposite each other, which extend on respective vertical planes which are parallel to each other and to said reference axis (A),
the two air diffusion walls (10) have support means (18) that are structured to support said cultivation trays (5) arranged on said two columns of trays in the respective cultivation planes, and have a plurality of through openings (14) for selectively emitting the conditioned air present in said air distribution duct (9) towards said cultivation trays (5) of said two columns of trays,
wherein
said air-conditioning system (6) comprises an conditioning apparatus (20) designed to generate conditioned air, and at least one delivery duct (7) that connects said conditioning apparatus (20) to said at least one air distribution duct (9); said air distribution duct (9) being connected at the top to said delivery duct (7), said cultivation system is **characterised in that** comprises a tubular element which extends horizontally in said cultivation container (2),
wherein the air-conditioning system (6) further comprises at least one suction duct (8) structured to have one or more suction openings (21) arranged in the cultivation container (2).

2. The cultivation system according to claim 1, comprising bulkheads which are slidably mounted on said vertical walls (10) at said through openings to adjust the conditioned air fed to said cultivation trays (5).

3. The cultivation system according to claim 1 or 2, comprising two air distribution ducts (9), which are parallel and spaced apart from each other, are each interposed between two respective columns of cultivation trays, each support the relative cultivation trays (5) by means of said support means (18), and both emit the conditioned air towards the respective two columns of trays through the respective through openings (14).

4. The cultivation system according to any one of the preceding claims, wherein said cultivation trays (5) comprise one side arranged to rest on said support means (18) of an air diffusion wall (10) of a distribution duct (9) and an opposite side arranged to rest on a vertical support frame (3).

5. The cultivation system according to claim 3, wherein said air distribution duct (9) is arranged in an intermediate position of the inner space of said cultivation container (2) so as to be spaced apart and separated from said vertical side walls of said cultivation container (2).

6. The cultivation system according to claim 3, wherein said air distribution ducts (9) extend parallel to each other and to the reference axis (A) at pre-set distances from each other, corresponding approximately to the width of the cultivation trays (5), said cultivation trays (5) comprise one side arranged to rest on support means (18) of an air diffusion wall (10) of a distribution duct (9) and the opposite side arranged to rest on support means (18) of the air diffusion wall (10) of another adjacent air distribution duct (9) .

7. The cultivation system according to any one of the preceding claims, wherein said through openings (14) comprise slits (15) which extend rectilinear and parallel to said axis (A) and to the cultivation planes (Pi) of said cultivation trays (5).

8. The cultivation system according to claim 7, wherein said slits (15) of said air diffusion walls (10) of a said air distribution duct (9) are coplanar and are structured to convey the air flows (FL) in horizontal directions with mutually opposite directions.

9. The cultivation system according to any of the foregoing claims, comprising at least one ventilation assembly (40) which is arranged along said delivery duct (7) to receive the conditioned air and is designed to generate a flow of conditioned air so as to convey it to the inside of the delivery duct (7) in a respective air distribution duct (9) with a pre-set flowrate/pressure.

10. The cultivation system according to claim 9, wherein said ventilation assembly (40) comprises one or more fans which are arranged along said delivery duct (7) so as to receive the conditioned air with a certain flowrate/pressure from an inlet channel and generate in an outlet channel, a flow of conditioned air having a pre-set flowrate/pressure greater than the flowrate/pressure present in the inlet channel.

11. The cultivation system according to claim 10, comprising electronic means (100) configured so as to selectively control the rotational speed of the fans of the ventilation assemblies (40) so as to adjust the air flowrates emitted from the air distribution ducts (9) towards the relative cultivation trays (5).

12. The cultivation system according to any of the previous claims, wherein said suction duct (8) extends from the cultivation container (2) through a vertical wall (2a) outside thereof, and is connected to an inlet channel to the conditioning apparatus (20) to provide it with air to be treated/conditioned.

13. The cultivation system according to claim 12, wherein the suction openings (21) are arranged on the bottom wall of the cultivation container (2).

14. An operating method for a cultivation system (1) for cultivating plants comprising:
a closed cultivation container (2) which extends along a horizontal reference axis (A) and having vertical side walls which extend parallel to said reference axis (A),
a plurality of cultivation trays (5) for cultivating the plants, which are arranged in said cultivation container (2) in positions alongside one another approximately horizontal and lying on a series of cultivation planes (Pi) arranged one on top of the other with respective pre-set heights (Li) relative to a horizontal reference plane (Z) so as to form a plurality of vertical columns of cultivation trays (5),
an air-conditioning system (6) which is designed to feed conditioned air into said cultivation container (2) through at least a box-shaped air distribution duct (9), which is vertically interposed between two vertical columns of cultivation trays (5),
said air distribution duct (9) comprises two air diffusion walls (10) opposite each other, which extend on respective vertical planes which are parallel to each other and to said reference axis (A),
the two air diffusion walls (10) have support means (18) structured to support said cultivation trays (5) arranged on the two columns of trays in the respective cultivation planes, and have a plurality of through openings (14),
said air-conditioning system (6) comprises a conditioning apparatus (20) designed to generate conditioned air, and at least one delivery duct (7) that connects said conditioning apparatus (20) to said at least one air distribution duct (9);
wherein said method is **characterised in that** the air-conditioning system (6) further comprises at least one suction duct (8) structured to have one or more suction openings (21) arranged in the cultivation container (2),
said air distribution duct (9) being connected at the top to said delivery duct (7), and comprises a tubular element which extends horizontally in said cultivation container (2),
said method comprising the step of:
selectively emitting through said through openings (14) the conditioned air present in said air distribution duct (9) in opposite directions to each other towards said cultivation trays (5) present in said two columns of trays.

## Patentansprüche

1. Kultivierungssystem (1) für die Kultivierung von Pflanzen, umfassend:
einen geschlossenen Kultivierungsbehälter (2), der sich entlang einer horizontalen Bezugsachse (A) erstreckt und vertikale Seitenwände aufweist, die sich parallel zur Bezugsachse (A) erstrecken,
eine Vielzahl von Kultivierungsschalen (5) für die Kultivierung der Pflanzen, die in dem Kultivierungsbehälter (2) in Positionen nebeneinander annähernd horizontal angeordnet sind und auf einer Reihe von Kultivierungsebenen (Pi) liegen, die mit jeweiligen vorgegebenen Höhen (Li) relativ zu einer horizontalen Bezugsebene (Z) übereinander angeordnet sind, um eine Vielzahl von vertikalen Säulen von Kultivierungsschalen (5) zu bilden,
ein Luftklimatisierungssystem (6), das so ausgelegt ist, dass es klimatisierte Luft in den Kultivierungsbehälter (2) durch mindestens eine kastenförmige Luftverteilungsleitung (9) einspeist, die vertikal zwischen zwei vertikalen Säulen von Kultivierungsschalen (5) angeordnet ist,
die Luftverteilungsleitung (9) zwei einander gegenüberliegende Luftdiffusionswände (10) umfasst, die sich auf jeweils vertikalen Ebenen erstrecken, die parallel zueinander und zur Bezugsachse (A) verlaufen,
die zwei Luftdiffusionswände (10) Stützmittel (18) aufweisen, die so strukturiert sind, dass sie die Kultivierungsschalen (5) stützen, die auf den zwei Säulen von Schalen in den jeweiligen Kultivierungsebenen angeordnet sind, und eine Vielzahl von Durchgangsöffnungen (14) aufweisen, um die klimatisierte Luft, die in der Luftverteilungsleitung (9) vorhanden ist, selektiv in Richtung der Kultivierungsschalen (5) der zwei Säulen von Schalen abzugeben,
wobei
wobei das Luftklimatisierungssystem (6) eine Klimatisierungsvorrichtung (20), die dazu ausgelegt ist, klimatisierte Luft zu erzeugen, und mindestens eine Zufuhrleitung (7) umfasst, die die Klimatisierungsvorrichtung (20) mit der mindestens einen Luftverteilungsleitung (9) verbindet; wobei die Luftverteilungsleitung (9) oben mit einer Zufuhrleitung (7) verbunden ist, wobei das Kultivierungssystem **dadurch gekennzeichnet ist, dass** es ein rohrförmiges Element umfasst, das sich horizontal in dem Kultivierungsbehälter (2) erstreckt,
wobei das Luftklimatisierungssystem (6) ferner mindestens eine Ansaugleitung (8) umfasst, die so strukturiert ist, dass sie eine oder mehrere Saugöffnungen (21) aufweist, die in dem Kultivierungsbehälter (2) angeordnet sind.

2. Kultivierungssystem nach Anspruch 1, umfassend Schotte, die verschiebbar an den vertikalen Wänden (10) an den Durchgangsöffnungen montiert sind, um die den Kultivierungsschalen (5) zugeführte klimatisierte Luft einzustellen.

3. Kultivierungssystem nach Anspruch 1 oder 2, umfassend zwei Luftverteilungsleitungen (9), die parallel und voneinander beabstandet sind und jeweils zwischen zwei jeweiligen Säulen von Kultivierungsschalen angeordnet sind, wobei jede die jeweiligen Kultivierungsschalen (5) mittels der Stützmittel (18) stützt und beide die klimatisierte Luft durch die jeweiligen Durchgangsöffnungen (14) in Richtung der jeweiligen zwei Säulen von Schalen abgeben.

4. Kultivierungssystem nach einem der vorhergehenden Ansprüche, wobei die Kultivierungsschalen (5) eine Seite, die so angeordnet ist, dass sie auf den Stützmitteln (18) einer Luftdiffusionswand (10) einer Verteilungsleitung (9) aufliegt, und eine gegenüberliegende Seite umfassen, die so angeordnet ist, dass sie auf einem vertikalen Stützrahmen (3) aufliegt.

5. Kultivierungssystem nach Anspruch 3, wobei die Luftverteilungsleitung (9) in einer Zwischenposition des Innenraums des Kultivierungsbehälters (2) so angeordnet ist, dass sie von den vertikalen Seitenwänden des Kultivierungsbehälters (2) beabstandet und getrennt ist.

6. Kultivierungssystem nach Anspruch 3, wobei sich die Luftverteilungsleitungen (9) parallel zueinander und zur Bezugsachse (A) in vorgegebenen Abständen voneinander erstrecken, die ungefähr der Breite der Kultivierungsschalen (5) entsprechen, wobei die Kultivierungsschalen (5) eine Seite, die so angeordnet ist, dass sie auf Stützmitteln (18) einer Luftdiffusionswand (10) einer Verteilungsleitung (9) aufliegt, und die gegenüberliegende Seite umfassen, die so angeordnet ist, dass sie auf Stützmitteln (18) der Luftdiffusionswand (10) einer anderen benachbarten Luftverteilungsleitung (9) aufliegt.

7. Kultivierungssystem nach einem der vorhergehenden Ansprüche, wobei die Durchgangsöffnungen (14) Schlitze (15) umfassen, die sich geradlinig und parallel zu der Achse (A) und zu den Kultivierungsebenen (Pi) der Kultivierungsschalen (5) erstrecken.

8. Kultivierungssystem nach Anspruch 7, wobei die Schlitze (15) der Luftdiffusionswände (10) einer Luftverteilungsleitung (9) koplanar sind und strukturiert sind, um die Luftströme (FL) in horizontale Richtungen mit zueinander entgegengesetzten Richtungen zu befördern.

9. Kultivierungssystem nach einem der vorhergehenden Ansprüche, umfassend mindestens eine Belüftungsbaugruppe (40), die entlang der Zufuhrleitung (7) angeordnet ist, um die klimatisierte Luft zu empfangen, und dazu ausgelegt ist, einen Strom von klimatisierter Luft zu erzeugen, um sie in das Innere der Zufuhrleitung (7) in einer jeweiligen Luftverteilungsleitung (9) mit einem vorgegebenen Durchfluss/Druck zu befördern.

10. Kultivierungssystem nach Anspruch 9, wobei die Belüftungsbaugruppe (40) ein oder mehrere Gebläse umfasst, die entlang der Zufuhrleitung (7) angeordnet sind, um die klimatisierte Luft mit einem bestimmten Durchfluss/Druck von einem Einlasskanal zu empfangen und in einem Auslasskanal einen Strom klimatisierter Luft zu erzeugen, der einen vorgegebenen Durchfluss/Druck aufweist, der größer ist als der Durchfluss/Druck, der im Einlasskanal vorliegt.

11. Kultivierungssystem nach Anspruch 10, umfassend elektronische Mittel (100), die konfiguriert sind, um die Drehzahl der Gebläse der Belüftungsbaugruppen (40) selektiv zu steuern, um die Durchflüsse einzustellen, die von den Luftverteilungsleitungen (9) in Richtung der jeweiligen Kultivierungsschalen (5) abgegeben werden.

12. Kultivierungssystem nach einem der vorhergehenden Ansprüche, wobei sich die Ansaugleitung (8) von dem Kultivierungsbehälter (2) durch eine vertikale Wand (2a) außerhalb derselben erstreckt und mit einem Einlasskanal zu der Klimatisierungsvorrichtung (20) verbunden ist, um diese mit zu behandelnder/zu klimatisierender Luft zu versorgen.

13. Kultivierungssystem nach Anspruch 12, wobei die Ansaugöffnungen (21) an der Bodenwand des Kultivierungsbehälters (2) angeordnet sind.

14. Betriebsverfahren für ein Kultivierungssystem (1) für die Kultivierung von Pflanzen, umfassend:
einen geschlossenen Kultivierungsbehälter (2), der sich entlang einer horizontalen Bezugsachse (A) erstreckt und vertikale Seitenwände aufweist, die sich parallel zur Bezugsachse (A) erstrecken,
eine Vielzahl von Kultivierungsschalen (5) für die Kultivierung der Pflanzen, die in dem Kultivierungsbehälter (2) in Positionen nebeneinander annähernd horizontal angeordnet sind und auf einer Reihe von Kultivierungsebenen (Pi) liegen, die mit jeweiligen vorgegebenen Höhen (Li) relativ zu einer horizontalen Bezugsebene (Z) übereinander angeordnet sind, um eine Vielzahl von vertikalen Säulen von Kultivierungsschalen (5) zu bilden,
ein Luftklimatisierungssystem (6), das so ausgelegt ist, dass es klimatisierte Luft in den Kultivierungsbehälter (2) durch mindestens eine kastenförmige Luftverteilungsleitung (9) einspeist, die vertikal zwischen zwei vertikalen Säulen von Kultivierungsschalen (5) angeordnet ist,
die Luftverteilungsleitung (9) zwei einander gegenüberliegende Luftdiffusionswände (10) umfasst, die sich auf jeweils vertikalen Ebenen erstrecken, die parallel zueinander und zur Bezugsachse (A) verlaufen,
die zwei Luftdiffusionswände (10) Stützmittel (18) aufweisen, die so strukturiert sind, dass sie die Kultivierungsschalen (5) stützen, die auf den zwei Säulen von Schalen in den jeweiligen Kultivierungsebenen angeordnet sind, und eine Vielzahl von Durchgangsöffnungen (14) aufweisen,
das Luftklimatisierungssystem (6) eine Klimatisierungsvorrichtung (20), die dazu ausgelegt ist, klimatisierte Luft zu erzeugen, und mindestens eine Zufuhrleitung (7) umfasst, die die Klimatisierungsvorrichtung (20) mit der mindestens einen Luftverteilungsleitung (9) verbindet;
wobei das Verfahren **dadurch gekennzeichnet ist, dass** das Luftklimatisierungssystem (6) ferner mindestens eine Ansaugleitung (8) umfasst, die so strukturiert ist, dass sie eine oder mehrere Saugöffnungen (21) aufweist, die in dem Kultivierungsbehälter (2) angeordnet sind,
wobei die Luftverteilungsleitung (9) oben mit einer Zufuhrleitung (7) verbunden ist und ein rohrförmiges Element umfasst, das sich horizontal in dem Kultivierungsbehälter (2) erstreckt,
wobei das Verfahren den Schritt umfasst:
selektives Abgeben der in der Luftverteilungsleitung (9) vorhandenen klimatisierten Luft durch die Durchgangsöffnungen (14) in zueinander entgegengesetzte Richtungen zu den in den zwei Säulen von Schalen vorhandenen Kultivierungsschalen (5).

## Revendications

1. Système de culture (1) pour cultiver des plantes comprenant :
un conteneur de culture fermé (2) qui s'étend le long d'un axe de référence horizontal (A) et dont les parois latérales verticales s'étendent parallèlement à audit axe de référence (A),
une pluralité de plateaux de culture (5) pour cultiver des plantes, qui sont disposés dans ledit conteneur de culture (2) dans des positions les unes à côté des autres approximativement horizontales et reposant sur une série de plans de culture (Pi) disposés les uns au-dessus des autres avec des hauteurs respectives (Li) prédéfinies par rapport à un plan de référence horizontal (Z) de manière à former une pluralité de colonnes verticales de plateaux de culture (5),
un système de climatisation (6) étant conçu pour introduire de l'air climatisé dans ledit conteneur de culture (2) par l'intermédiaire d'au moins un conduit de distribution d'air (9) en forme de boîte, qui est verticalement interposé entre deux colonnes verticales de plateaux de culture (5),
ledit conduit de distribution d'air (9) comprend deux parois de diffusion d'air (10) opposées l'une à l'autre, qui s'étendent sur des plans verticaux respectifs parallèles l'un à l'autre et audit axe de référence (A),
les deux parois de diffusion d'air (10) comportent des moyens de support (18) qui sont structurés pour supporter lesdits plateaux de culture (5) disposés sur lesdites deux colonnes de plateaux dans les plans de culture respectifs, et comportent une pluralité d'ouvertures traversantes (14) pour émettre sélectivement l'air climatisé présent dans ledit conduit de distribution d'air (9) vers lesdits plateaux de culture (5) desdites deux colonnes de plateaux,
où
ledit système de climatisation (6) comprend un appareil de climatisation (20) conçu pour générer de l'air climatisé, et au moins un conduit de distribution (7) qui relie ledit appareil de climatisation (20) audit au moins un conduit de distribution d'air (9) ; ledit conduit de distribution d'air (9) étant relié au niveau de la partie supérieure audit conduit de distribution (7), ledit système de culture est **caractérisé en ce qu'**il comprend un élément tubulaire qui s'étend horizontalement dans ledit conteneur de culture (2),
le système de climatisation (6) comprenant en outre au moins un conduit d'aspiration (8) structuré pour comporter une ou plusieurs ouvertures d'aspiration (21) disposées dans le conteneur de culture (2).

2. Système de culture selon la revendication 1, comprenant des cloisons qui sont montées de manière coulissantes sur lesdites parois verticales (10) au niveau desdites ouvertures traversantes pour régler l'air climatisé alimentant lesdits plateaux de culture (5).

3. Système de culture selon la revendication 1 ou 2, comprenant deux conduits de distribution d'air (9), étant parallèles et espacés l'un de l'autre, étant chacun interposés entre deux colonnes respectives de plateaux de culture, chacun supportant les plateaux de culture relatifs (5) au moyen desdits moyens de support (18), et émettant tous deux l'air climatisé vers les deux colonnes respectives de plateaux à travers les ouvertures traversantes (14) respectives.

4. Système de culture selon l'une quelconque des revendications précédentes, lesdits plateaux de culture (5) comportant un côté destiné à reposer sur lesdits moyens de support (18) d'une paroi de diffusion d'air (10) d'un conduit de distribution (9) et un côté opposé destiné à reposer sur un cadre de support vertical (3).

5. Système de culture selon la revendication 3, ledit conduit de distribution d'air (9) étant disposé dans une position intermédiaire de l'espace intérieur dudit conteneur de culture (2) de manière à être espacé et séparé desdites parois latérales verticales dudit conteneur de culture (2).

6. Système de culture selon la revendication 3, lesdits conduits de distribution d'air (9) s'étendant parallèlement les uns aux autres et par rapport à l'axe de référence (A) à des distances prédéfinies les uns des autres, correspondant approximativement à la largeur des plateaux de culture (5), lesdits plateaux de culture (5) comprenant un côté destiné à reposer sur les moyens de support (18) d'une paroi de diffusion d'air (10) d'un conduit de distribution (9) et le côté opposé destiné à reposer sur des moyens de support (18) de la paroi de diffusion d'air (10) d'un autre conduit de distribution d'air (9) adjacent.

7. Système de culture selon l'une quelconque des revendications précédentes, lesdites ouvertures traversantes (14) comprenant des fentes (15) qui s'étendent de manière rectiligne et parallèle audit axe (A) et aux plans de culture (Pi) desdits plateaux de culture (5).

8. Système de culture selon la revendication 7, lesdites fentes (15) desdites parois de diffusion d'air (10) dudit conduit de distribution d'air (9) étant coplanaires et structurées de manière à acheminer les flux d'air (FL) dans des directions horizontales aux directions mutuellement opposées.

9. Système de culture selon l'une quelconque des revendications précédentes, comprenant au moins un ensemble de ventilation (40) étant disposé le long dudit conduit de distribution (7) pour recevoir l'air climatisé et qui est conçu pour générer un flux d'air climatisé de manière à l'acheminer vers l'intérieur du conduit de distribution (7) dans un conduit de distribution d'air respectif (9) avec un débit/une pression prédéfini(e).

10. Système de culture selon la revendication 9, ledit ensemble de ventilation (40) comprenant un ou plusieurs ventilateurs qui sont disposés le long dudit conduit de distribution (7) de manière à recevoir l'air climatisé avec un certain débit/une certaine pression à partir d'un canal d'entrée et à générer dans un canal de sortie, un flux d'air climatisé ayant un débit/une pression prédéfini(e) supérieur(e) au débit/à la pression présent(e) dans le canal d'entrée.

11. Système de culture selon la revendication 10, comprenant des moyens électroniques (100) configurés pour commander sélectivement la vitesse de rotation des ventilateurs des ensembles de ventilation (40) afin de régler les débits d'air émis par les conduits de distribution d'air (9) vers les plateaux de culture (5) correspondants.

12. Système de culture selon l'une quelconque des revendications précédentes, ledit conduit d'aspiration (8) s'étendant du conteneur de culture (2) à travers une paroi verticale (2a) à l'extérieur de celui-ci, et est relié à un canal d'entrée de l'appareil de climatisation (20) pour lui fournir de l'air à traiter/à climatiser.

13. Système de culture selon la revendication 12, les ouvertures d'aspiration (21) étant disposées sur la paroi inférieure du conteneur de culture (2).

14. Procédé de fonctionnement d'un système de culture (1) pour cultiver des plantes comprenant :
un conteneur de culture fermé (2) qui s'étend le long d'un axe de référence horizontal (A) et dont les parois latérales verticales s'étendent parallèlement à audit axe de référence (A),
une pluralité de plateaux de culture (5) pour cultiver des plantes, qui sont disposés dans ledit conteneur de culture (2) dans des positions les unes à côté des autres approximativement horizontales et reposant sur une série de plans de culture (Pi) disposés les uns au-dessus des autres avec des hauteurs respectives (Li) prédéfinies par rapport à un plan de référence horizontal (Z) de manière à former une pluralité de colonnes verticales de plateaux de culture (5),
un système de climatisation (6) étant conçu pour introduire de l'air climatisé dans ledit conteneur de culture (2) par l'intermédiaire d'au moins un conduit de distribution d'air (9) en forme de boîte, qui est verticalement interposé entre deux colonnes verticales de plateaux de culture (5),
ledit conduit de distribution d'air (9) comprend deux parois de diffusion d'air (10) opposées l'une à l'autre, qui s'étendent sur des plans verticaux respectifs parallèles l'un à l'autre et audit axe de référence (A),
les deux parois de diffusion d'air (10) comportent des moyens de support (18) structurés pour supporter lesdits plateaux de culture (5) disposés sur les deux colonnes de plateaux dans les plans de culture respectifs, et comportent une pluralité d'ouvertures traversantes (14),
ledit système de climatisation (6) comprend un appareil de climatisation (20) conçu pour générer de l'air climatisé, et au moins un conduit de distribution (7) qui relie ledit appareil de climatisation (20) audit au moins un conduit de distribution d'air (9) ;
ledit procédé étant **caractérisé en ce que** le système de climatisation (6) comprend en outre au moins un conduit d'aspiration (8) structuré de manière à comporter une ou plusieurs ouvertures d'aspiration (21) disposées dans le conteneur de culture (2),
ledit conduit de distribution d'air (9) étant relié au niveau de la partie supérieur dudit conduit de distribution (7), et comprend un élément tubulaire qui s'étend horizontalement dans ledit conteneur de culture (2),
ledit procédé comprenant l'étape suivante :
l'émission de manière sélective à travers lesdites ouvertures traversantes (14) de l'air climatisé présent dans ledit conduit de distribution d'air (9) dans des directions opposées l'une à l'autre vers lesdits plateaux de culture (5) présents dans lesdites deux colonnes de plateaux.
